# EUROPÄISCHE PATENTSCHRIFT

(11) **EP 3 440 444 B1**
(45) Veröffentlichungstag und Bekanntmachung des Hinweises auf die Patenterteilung: **08.03.2023**
(21) Anmeldenummer: 17719174.9
(22) Anmeldetag: 03.04.2017
(51) Int. Cl.: G01L 1/14, D03D 1/00, D03D 25/00, G01L 1/20, G06F 3/041

(54) **GEWEBE MIT MEHREREN GEWEBELAGEN**
WOVEN FABRIC HAVING A PLURALITY OF WOVEN FABRIC LAYERS
TISSU COMPORTANT PLUSIEURS COUCHES DE TISSU

(30) Priorität: 04.04.2016 DE 102016106074
(43) Veröffentlichungstag der Anmeldung: 13.02.2019
(73) Patentinhaber: Pilz GmbH & Co. KG, 73760 Ostfildern (DE)
(72) Erfinder: HORTER, Hansjürgen, 72644 Oberboihingen (DE); GÖNNER, Karl, 88499 Riedlingen (DE); HOFMANN, Paul, 89257 Illertissen (DE); CALISKAN, Metin, 72770 Reutlingen (DE); IBROCEVIC, Onedin, 73525 Schwäbisch Gmünd (DE); KUCZERA, Matthias, 70771 Leinfelden-Echterdingen (DE)
(74) Vertreter: Witte, Weller & Partner Patentanwälte mbB
(86) Internationale Anmeldenummer: PCT/EP2017/057849
(87) Internationale Veröffentlichungsnummer: WO 2017/174505

(56) Entgegenhaltungen:
- DE-A1-102011 111 061
- JP-A- 2011 102 457
- JP-A- 2012 031 550
- JP-A- 2016 031 269
- US-A1- 2003 211 797
- US-A1- 2014 150 573

## Beschreibung

Die Erfindung betrifft ein Gewebe mit wenigstens drei übereinander angeordneten Lagen, von denen zumindest zwei Gewebelagen sind. Das Gewebe ist dazu eingerichtet eine einwirkende Kraft oder einen einwirkenden Druck zu erfassen.

Ein sensorisches Gewebe mit einer Gewebelage ist beispielsweise aus US 4 795 998 A bekannt. Leitfähige Fäden der Gewebelage kreuzen sich an Kreuzungsstellen. Abhängig von einer einwirkenden Kraft verändert sich der Übergangswiderstand zwischen den aneinander anliegenden Fäden. Dadurch kann eine auf einer der Kreuzungsstellen einwirkende Kraft erkannt werden.

WO 2005/121729 A1 beschreibt einen textilen kapazitiven Sensor mit einem vollflächig leitenden Textil als unterster Schicht und einer nicht elektrisch leitfähigen obersten Schicht. Auf diese oberste Schicht sind flächige Elektroden aufgebracht, die jeweils gemeinsam mit der untersten Schicht einen Kondensator mit variabler Kapazität bilden. Zwischen der obersten Schicht und der untersten Schicht ist ein nicht elektrisch leitfähiges elastisches Material angeordnet. Wenn durch Krafteinwirkung der Abstand zwischen den Elektroden und der untersten leitfähigen Schicht verändert wird, ändert sich die Kapazität, was durch eine entsprechende Schaltung erfasst werden kann.

DE 60102003 T2 offenbart einen leitfähigen druckempfindlichen Stoff. Dabei sind leitfähige Fäden in einer Lage gekreuzt angeordnet, wobei ohne Krafteinwirkung an den Kreuzungspunkten kein elektrisch leitfähiger Kontakt hergestellt ist. Hierfür sind elektrisch nicht leitfähige Fäden eingearbeitet, die die sich kreuzenden elektrisch leitfähigen Fäden im Ausgangszustand auf Abstand halten. Erst wenn eine Kraft oder ein Druck auf den Stoff einwirkt, wird ein elektrisch leitfähiger Kontakt an einer Kreuzungsstelle hergestellt.

Eine ähnliche Anordnung ist auch aus US 4 659 873 A bekannt. Dort sind elektrisch leitfähige Gewebelagen durch nicht leitfähige Abstandsmittel - wie etwa einen Luftspalt, nicht leitfähige Fäden oder kuppelförmige Abstandshalter voneinander beabstandet. Bei Krafteinwirkung wird ein elektrisch leitfähiger Kontakt zwischen den Gewebelagen hergestellt.

JP 2011 102457 A offenbart ein elektrisch leitfähiges Gewebe mit einer dreidimensionalen Struktur, in der zwei leitfähige Gewebe übereinandergelegt und durch Polgarne verbunden sind. In den leitfähigen Geweben sind jeweils leitfähige und nichtleitfähige Fäden parallel zu einander angeordnet. Die Gewebe sind so übereinandergelegt, dass sich die leitfähige und nichtleitfähige der beiden Schichten überlappen und drucksensitive Zellen ausbilden.

JP 2012 031550 A offenbart einen weiteren drucksensitiven Sensor mit zwei gewebten, elektrisch leitfähigen Schichten und einer dazwischenliegenden nicht-leitfähigen Schicht.

JP 2016 031269 A offenbart einen weiteren drucksensitiven Sensor mit zwei gewebten, elektrisch leitfähigen Schichten, die auf Abstand gehalten werden, um kapazitive Sensorzellen auszubilden.

US 2014/150573 A1 offenbart eine Vorrichtung und ein Verfahren zum Messen des Drucks, der an verschiedenen Stellen eines flexiblen, biegsamen Gewebes ausgeübt wird, wobei drei gestapelte Schichten vorgesehen sind. Wenn ein Druck auf das Gewebe ausgeübt wird, variiert ein elektrischer Widerstand, wodurch eine Druckbelastung bestimmbar ist.

DE 10 2011 111061 A1 offenbart ein Gewebe mit zwei Stofflagen, die in parallelen Ebenen angeordnet sind, wobei jede Gewebelage fadenverkreuzte Kett- und Schussfäden umfasst und die Gewebelagen über Polfäden miteinander verbunden sind. In wenigstens eine der Gewebelagen ist dabei ein elektrisch leitfähiger Faden eingewoben, um eine Leiterbahn auszubilden.

US 2003/211797 A1 offenbart ein mehrschichtiges Gewebe, in dem Kett- und Schussfäden einzelner Schichten miteinander verflochten sind. Eine elektrische Funktion wird durch einen oder mehrere Schaltungsträger bereitgestellt, die in Hohlräumen in dem mehrschichtigen Gewebe und/oder einem oder mehreren Funktionsgarnen angeordnet sind.

Es kann als Aufgabe der vorliegenden Erfindung angesehen werden, ein sensorisches Gewebe zu schaffen, das sich sehr einfach an eine externe Auswerteschaltung anschließen lässt.

Diese Aufgabe wird durch ein Gewebe mit den Merkmalen des Patentanspruches 1 gelöst.

Das Gewebe hat wenigstens drei übereinander angeordnete Lagen, wobei zumindest zwei davon Gewebelagen sind. Eine der Lagen bildet eine erste Gewebelage und eine weitere der Lagen bildet eine zweite Gewebelage. Die erste und die zweite Gewebelage weisen jeweils elektrisch leitfähige Kettfäden und/oder Schussfäden auf. Zwischen der ersten Gewebelage und der zweiten Gewebelage ist noch eine weitere, mittlere Lage vorhanden, die durch eine mittlere Gewebelage gebildet sein kann. Die mittlere Lage kann auch Vliesmaterial und/oder Schaummaterial und/oder eine Folie und/oder ein Gestrick und/oder ein Gewirk und/oder ein Gelege aufweisen oder daraus bestehen.

Die erste Gewebelage, die zweite Gewebelage und die mittlere Lage sind nach Art einer Sandwichstruktur angeordnet. Sie bilden eine Sensoranordnung, die eine sich während einer Krafteinwirkung ändernde elektrische Eigenschaft aufweist. Die mittlere Lage liegt dabei vorzugsweise unmittelbar an der ersten und der zweiten Gewebelage an.

Die Sensoranordnung kann eine kapazitive Sensoranordnung und/oder eine piezoelektrische Sensoranordnung und/oder eine resistive bzw. eine piezoresistive Sensoranordnung sein. Besteht die mittlere Gewebelage beispielsweise aus nicht elektrisch leitfähigem Material, beispielsweise elektrisch nicht leitfähigen Fäden, das bzw. die ein Dielektrikum bilden, ist eine kapazitive Sensoranordnung nach Art eines Plattenkondensators erreicht. Die mittlere Lage bzw. Gewebelage kann auch Material bzw. Fäden aufweisen, die piezoelektrisches Material enthalten, so dass eine piezoelektrische Sensoranordnung gebildet ist. Außerdem besteht die Möglichkeit, dass die mittlere Gewebelage auch Material bzw. Fäden aus elektrisch leitfähigem Material aufweist, deren elektrischer Widerstand sich bei Kraft- bzw. Druckeinwirkung ändert, so dass eine resistive bzw. piezoresistive Sensoranordnung gebildet ist.

Es ist vorteilhaft, wenn lediglich drei Gewebelagen vorhanden sind. Werden diese webtechnisch unmittelbar miteinander verbunden, kann das Gewebe ausschließlich aus insgesamt drei Lagen bestehen. Bei einem anderen Ausführungsbeispiel kann zusätzlich zu den drei Lagen ein Bindungssystem vorhanden sein, das die drei Lagen bzw. Gewebelagen aneinander befestigt.

Die drei Lagen erstrecken sich in einer Ebene, die durch eine Kettrichtung und eine Schussrichtung aufgespannt wird. Abgesehen von der Ondulation der Kettfäden und Schussfäden durch die webtechnische Bindung verlaufen die Kettfäden in Kettrichtung und die Schussfäden in Schussrichtung. Das Gewebe hat rechtwinklig zur Kettrichtung und rechtwinklig zur Schussrichtung in einer Höhenrichtung eine Dicke, die gegenüber der Abmessung des Gewebes in Kettrichtung sowie in Schussrichtung geringer ist.

Die erste Gewebelage und die zweite Gewebelage haben jeweils abwechselnd nebeneinander angeordnete elektrisch leitfähige und elektrisch nicht leitfähige Streifen. Die Streifen erstrecken sich in Kettrichtung oder in Schussrichtung. Die Ausrichtung der Streifen ist in der zweiten Gewebelage quer und vorzugsweise rechtwinklig zu der Ausrichtung der Streifen in der ersten Gewebelage. Die leitfähigen Streifen bilden eine Gitter- oder Matrixstruktur. An den Kreuzungsstellen ist sozusagen jeweils ein Sensorfeld gebildet, so dass abhängig von der Dichte und der Anzahl der Kreuzungsstellen eine Bestimmung der Stelle bzw. des Ortes möglich ist, an der die Kraft auf das Gewebe bzw. die Sensoranordnung einwirkt.

Bei dieser Anordnung ist es möglich, das Gewebe an maximal zwei benachbarten Webekanten oder Seiten elektrisch mit einer Auswerteschaltung zu kontaktieren. Dadurch wird die Anwendung des sensorischen Gewebes vereinfacht, insbesondere wenn damit eine große Fläche ausgestattet werden soll. Das erfindungsgemäße Gewebe kann auch als sensorisches Mehrlagengewebe bezeichnet werden. Es ist dazu eingerichtet, Kraft- bzw. Druckeinwirkung an bestimmten Stellen zu lokalisieren. Somit ist das Gewebe in der Lage, ortsaufgelöst die Stelle der Kraft- bzw. Druckeinwirkung zu ermitteln und optional zusätzlich auch den Betrag der einwirkenden Kraft bzw. des einwirkenden Drucks zu charakterisieren. Solche Gewebe sind vielfältig einsetzbar. Sie können beispielsweise auf einem Untergrund verlegt werden, um die Position von sich bewegenden Objekten anzuzeigen. Dadurch ist es beispielsweise möglich, Kollisionen zwischen sich bewegenden Objekten bzw. zwischen sich bewegenden Objekten und stehenden Hindernissen zu vermeiden. Eine andere Anwendungsmöglichkeit besteht darin, Greifer, Roboterarme oder dergleichen an ihrer Außenfläche mit einem sensorischen Gewebe auszustatten, so dass ein Kontakt und die Kontaktstelle des Greifers bzw. Roboterarms mit einem Objekt ermittelt werden kann. Es sind auch vielfältige andere Anwendungen möglich.

Vorzugsweise ist die Breite eines leitfähigen Streifens quer zu seiner Erstreckung in Kettrichtung oder in Schussrichtung kleiner als die Breite eines benachbarten nicht leitfähigen Streifens. Diese Ausgestaltung kann in der ersten und/oder der zweiten Gewebelage verwirklicht sein. Durch das Minimieren der Breite der nicht leitfähigen Streifen, kann der sensorisch nutzbare Flächenanteil des Gewebes maximiert werden.

Es ist vorteilhaft, wenn nur drei Lagen bzw. Gewebelagen vorhanden sind. Mit drei Lagen kann eine resistive bzw. piezoresistive Sensoranordnung, eine kapazitive Sensoranordnung oder eine piezoelektrische Sensoranordnung aufgebaut werden. Die physikalische Funktionsweise der Sensoranordnung hängt von der Ausführung der mittleren Lage ab. Wenn die mittlere Lage Garne aufweist und beispielsweise als Gewebelage ausgebildet ist, hängt die physikalische Funktionsweise der Sensoranordnung vom Garnmaterial ab.

Bei einem bevorzugten Ausführungsbeispiel kann in der ersten Gewebelage oder der zweiten Gewebelage in wenigstens einem elektrisch nicht leitfähigen Streifen jeweils ein elektrisch leitfähiger Zwischenstreifen eingewebt ist, der gegenüber den beiden benachbarten elektrisch leitfähigen Streifen in dieser Gewebelage elektrisch isoliert ist. Insbesondere kann jeder elektrisch leitfähige Zwischenstreifen in der ersten Gewebelage oder zweiten Gewebelage mittels einer Durchkontaktierung mit genau einem elektrisch leitfähigen Streifen der jeweils anderen Gewebelage verbunden sein. Dadurch ist ein elektrisches Verbinden des Gewebes mit einer externen Schaltung über eine einzige Gewebelage möglich und vorzugsweise an einer einzigen Gewebekante. Der Anschlussbereich an dieser Gewebekante erstreckt sich vorzugsweise nur über einen Gewebekantenbereich, der zum Beispiel an eine Ecke des Gewebes anschließen kann. An diesem Anschlussbereich können Mittel zum Aufstecken einer Steckverbindung vorgesehen sein.

Es ist vorteilhaft, wenn die in einem elektrisch leitfähigen Streifen in Richtung des Streifens verlaufenden elektrisch leitfähigen Fäden (Kettfäden oder Schussfäden) durch wenigstens eine Querkontaktierung elektrisch miteinander verbunden sind. Dadurch ist sichergestellt, dass alle elektrisch leitfähigen Kettfäden oder Schussfäden dieses Streifens unmittelbar elektrisch miteinander verbunden sind und eine elektrische Spannung oder ein elektrischer Strom an jedem dieser elektrisch leitfähigen Kettfäden oder Schussfäden abgegriffen werden kann.

Die Querkontaktierung kann entweder über eine geeignete Bindung in Verbindung mit einer passenden Kett- und Schussdichte hergestellt werden oder beispielsweise durch wenigstens einen quer zur Richtung des Streifens verlaufenden elektrisch leitfähigen Schussfaden bzw. Kettfaden gebildet sein.

Die erste Gewebelage ist vorzugsweise an einer einzigen Seite des Gewebes elektrisch mit einer Auswerteschaltung verbunden. Bei einem Ausführungsbeispiel erstrecken sich die Streifen von dieser Seite weg. Analog hierzu kann auch die zweite Gewebelage an einer einzigen Seite des Gewebes elektrisch mit einer Auswerteschaltung verbunden sein. Auch von dieser Seite können sich die Streifen der zweiten Gewebelage weg erstrecken.

Die erste und die zweite Gewebelage sind an einer einzigen gemeinsamen Seite des Gewebes elektrisch mit einer Auswerteschaltung verbunden. Dabei können Durchkontaktierungen zur elektrischen Verbindung in den elektrisch nicht leitfähigen Streifen einer dieser beiden Gewebelagen vorhanden sein. Mittels dieser Durchkontaktierungen kann in der ersten Gewebelage oder der zweiten Gewebelage eine elektrische Verbindung mit einem zugeordneten leitfähigen Streifen in der jeweils anderen Gewebelage geschaffen werden. Die Durchkontaktierungen können elektrisch leitfähig mit der Seite des Gewebes bzw. der Gewebelage verbunden sein, an der die elektrische Kontaktierung mit der Auswerteschaltung erfolgen kann. Beispielsweise kann dafür innerhalb der elektrisch nicht leitfähigen Streifen jeweils eine leitfähige Verbindung mit der Durchkontaktierung hergestellt sein.

Es ist außerdem vorteilhaft, wenn ein Kettfaden oder ein Schussfaden der ersten Gewebelage aus einem elektrisch nicht leitfähigen Streifen eine webtechnische Bindung mit einem Schussfaden oder Kettfaden einer anderen Gewebelage bildet. Durch diese webtechnische Bindung entstehen keine unbeabsichtigten elektrischen Verbindungen zwischen den Gewebelagen. Analog hierzu ist es auch möglich, dass ein Kettfaden oder ein Schussfaden der zweiten Gewebelage aus einem elektrisch nicht leitfähigen Streifen eine webtechnische Bindung mit einem Schussfaden oder Kettfaden einer anderen Gewebelage bildet.

Bei einem bevorzugten Ausführungsbeispiel ist ein Bindungssystem mit elektrisch nicht leitfähigen Bindungskettfäden und/oder elektrisch nicht leitfähigen Bindungsschussfäden vorhanden. Das Bindungssystem bildet webtechnische Bindungen zur Verbindung der Gewebelagen. Vorzugsweise sind die erste Gewebelage, die zweite Gewebelage und die mittlere Lage bzw. Gewebelage nicht unmittelbar webtechnisch miteinander verbunden. Die Verbindung erfolgt mittelbar über das Bindungssystem.

Es ist vorteilhaft, wenn bei der Herstellung der ersten Gewebelage, der zweiten Gewebelage und - sofern die mittlere Lage als Gewebelage ausgeführt ist - der mittleren Gewebelage die webtechnischen Bindungen zur Verbindung der drei Gewebelagen gebildet werden. Die Sensoranordnung bzw. das sensorische Gewebe wird insbesondere auf einer Webmaschine hergestellt, wobei die Gewebelagen bereits bei der Herstellung, also beim Weben, mittelbar und/oder unmittelbar miteinander verbunden werden. Nachfolgende Bearbeitungsschritte zur Verbindung der Gewebelagen können daher entfallen.

Eine der vorhandenen Gewebelagen bildet eine unterste Gewebelage und eine andere der vorhandenen Gewebelagen bildet eine oberste Gewebelage. Die unterste Gewebelage und/oder die oberste Gewebelage kann jeweils durch Bindungsschussfäden und/oder Bindungskettfäden des Bindungssystems gebildet sein. Es ist auch möglich, dass die erste Gewebelage die oberste Gewebelage und/oder die zweite Gewebelage die unterste Gewebelage bildet. Mithin können beispielsweise zwei bis fünf Gewebelagen vorhanden sein.

Wenn ein Bindungssystem vorhanden ist, kann es vorteilhaft sein, wenn die erste und zweite Gewebelage lediglich an der mittleren Lage anliegen und untereinander nicht unmittelbar webtechnisch verbunden sind.

Weitere vorteilhafte Ausführungen der Erfindung ergeben sich aus den abhängigen Patentansprüchen, der Beschreibung sowie der Zeichnung. Nachfolgend werden bevorzugte Ausführungsbeispiele der Erfindung anhand der beigefügten Zeichnungen im Einzelnen erläutert. Es zeigen:
Figur 1 eine stark schematisierte Schnittdarstellung eines Ausführungsbeispiels eines Gewebes quer zur Schussrichtung,
Figur 2 das Gewebe Ausführung 1 in einer schematischen Explosionsdarstellung,
Figur 3 eine blockschaltbildähnliche Explosionsdarstellung des Aufbaus des Gewebes gemäß der Figuren 1 und 2,
Figur 4 das Gewebe aus Figur 3 bei hergestellter elektrischer Kontaktierung in einer blockschaltbildähnlichen Darstellung,
Figur 5 eine alternative Ausführungsform des Gewebes in einer blockschaltbildähnlichen Darstellung,
Figuren 6 bis 8 jeweils eine schematische Darstellung eines Ausführungsbeispiels einer durch das Gewebe gebildeten Sensoranordnung,
Figur 9 eine Prinzipdarstellung eines qualitativen Verlaufs eines Ohmschen Gesamtwiderstands in Abhängigkeit von der einwirkenden Kraft F bei einer resistiven Sensoranordnung aus Figur 6,
Figuren 10 bis 13 jeweils eine schematische Prinzipdarstellung unterschiedlicher webtechnischer Bindungen mittels eines Bindungssystems des Gewebes und
Figur 14 eine beispielhafte schematische Prinzipdarstellung des Webvorgangs zum Weben des Gewebes auf einer Webmaschine.

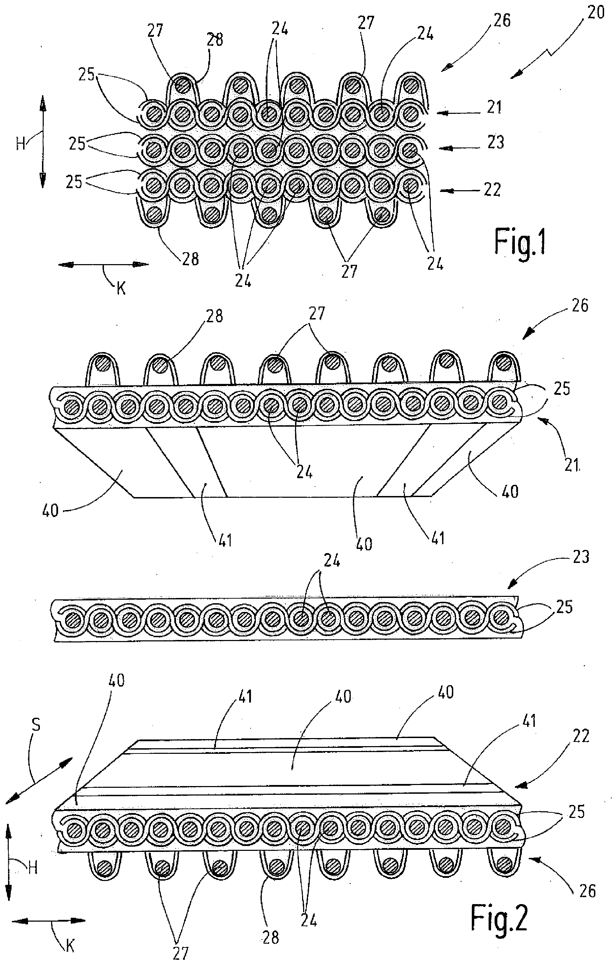

In den Figuren 1 bis 8 ist schematisch in verschiedenen Darstellungen und Ansichten ein mehrlagiges Gewebe 20 veranschaulicht. Das Gewebe 20 hat wenigstens drei und beim Ausführungsbeispiel genau drei Lagen, die beispielsgemäß durch Gewebelagen 21, 22, 23 gebildet sind. Jede Gewebelage 21, 22, 23 weist jeweils mehrere Schussfäden 24 sowie Kettfäden 25 auf. Abgesehen von der durch die webtechnischen Bindungen erzeugten Ondulation innerhalb einer Gewebelage 21, 22, 23 erstrecken sich die Kettfäden 25 in einer Kettrichtung K und die Schussfäden 24 in einer Schussrichtung S, die rechtwinklig zur Kettrichtung K orientiert ist. Die Schussrichtung S und die Kettrichtung K spannen eine Ebene auf, in der sich das Gewebe 20 erstreckt. Rechtwinklig zu dieser Ebene aus Schussrichtung S und Kettrichtung K hat das Gewebe 20 eine Dicke in einer Höhenrichtung H. Die Abmessung des Gewebes 20 in Höhenrichtung H ist kleiner als die Abmessung in Schussrichtung S und die Abmessung in Kettrichtung K, vorzugsweise um wenigstens den Faktor 10 bis 100.

Die Schussfäden 24 und die Kettfäden 25 jeder Gewebelage 21, 22, 23 sind innerhalb der betreffenden Gewebelage 21, 22, 23 webtechnisch miteinander verbunden. Optional können die Schussfäden 24 und Kettfäden 25 einer der Gewebelagen 21, 22, 23 unmittelbar mit Kettfäden 25 bzw. Schussfäden 24 einer anderen der Gewebelagen 21, 22, 23 webtechnische Bindungen bilden. Bei den in den Zeichnungen dargestellten bevorzugten Ausführungsbeispielen sind die Gewebelagen 21, 22, 23 nicht unmittelbar webtechnisch miteinander verbunden, sondern es ist ein Bindungssystem 26 vorhanden, das Bindungsschussfäden 27 und Bindungskettfäden 28 aufweist. Die Befestigung der Gewebelagen 21, 22, 23 miteinander bzw. aneinander erfolgt beispielsgemäß ausschließlich über das Bindungssystem 26. Die Schussfäden 24 und die Kettfäden 25 jeder einzelnen Gewebelage 21, 22, 23 sind dabei ausschließlich innerhalb der jeweiligen Gewebelage 21, 22, 23 webtechnisch miteinander gebunden.

Eine der Gewebelagen bildet eine erste Gewebelage 21, die elektrisch leitfähige Schussfäden 24 und/oder elektrisch leitfähige Kettfäden 25 aufweist. Eine weitere Gewebelage bildet eine zweite Gewebelage 22, die ebenfalls elektrisch leitfähige Schussfäden 24 und/oder elektrisch leitfähige Kettfäden 25 aufweist. Zwischen der ersten Gewebelage 21 und der zweiten Gewebelage 22 ist eine mittlere Gewebelage 23 angeordnet. Die mittlere Gewebelage 23 liegt mit einer Seite unmittelbar an der ersten Gewebelage 21 und mit der entgegengesetzten Seite unmittelbar an der zweiten Gewebelage 22 an. Die drei Gewebelagen 21, 22, 23 werden beispielsgemäß - wie bereits erläutert - durch das Bindungssystem 26 aneinander gehalten.

Als mittlere Lage kann anstelle des Gewebematerials alternativ oder zusätzlich auch Vlies und/oder Schaum und/oder Folienmaterial und/oder andere Textilmaterialien wie etwa ein Gestrick und/oder ein Gewirk und/oder ein Gelege verwendet werden. Vorteilhaft ist es, wenn das Material der mittleren Lage in Form von im Querschnitt runden Garnen und/oder bandförmigen Elementen bei der Herstellung der ersten und zweiten Gewebelage dazwischen angeordnet werden kann, insbesondere durch einen Schusseintrag in einer Webmaschine.

Das Gewebe 20 hat eine oberste Gewebelage LO sowie eine unterste Gewebelage LU. Abhängig davon, wie die webtechnische Bindung zwischen den drei Gewebelagen 21, 22, 23 erfolgt und abhängig davon, ob ein Bindungssystem 26 vorhanden ist oder nicht, kann die erste Gewebelage 21 die oberste Gewebelage LO und/oder die zweite Gewebelage 22 die unterste Gewebelage LU bilden.

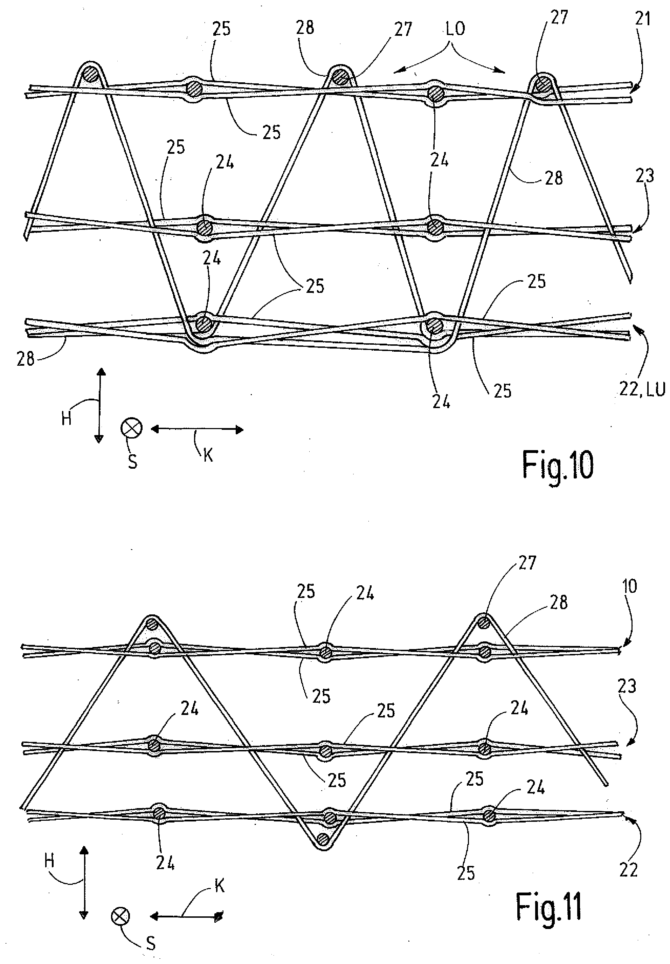

Bei dem in Figur 10 veranschaulichten Ausführungsbeispiel sind die Bindungsschussfäden 27 des Bindungssystems 26 lediglich benachbart zur ersten Gewebelage 21 angeordnet. Die Bindungskettfäden 28 bilden webtechnische Bindungen mit den Bindungsschussfäden 27 sowie den Schussfäden 24 der zweiten Gewebelage 22.

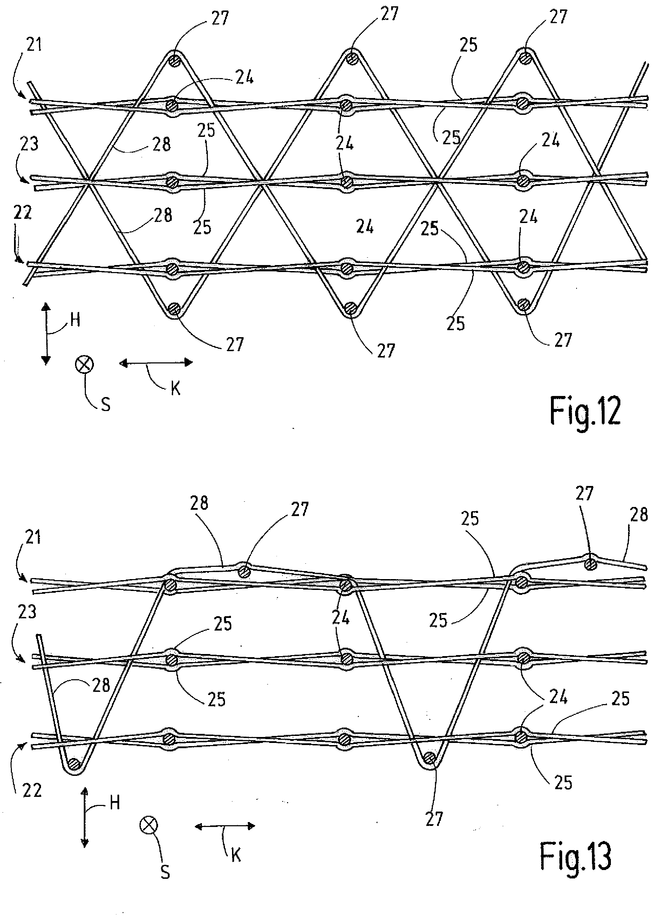

Bei bestimmten Ausführungsbeispielen könnte das Bindungssystem 26 auch ohne Bindungsschussfäden 27 ausgeführt sein und zumindest jeweils eine Teilmenge der Schussfäden 24 der ersten Gewebelage 21 und der zweiten Gewebelage 22 zur Herstellung der webtechnischen Bindungsstellen verwenden. Bei dem in Figur 10 dargestellten Ausführungsbeispiel wird die oberste Gewebelage LO durch die Bindungsschussfäden 27 und die Bindungskettfäden 28 benachbart zur ersten Gewebelage 21 gebildet. Die zweite Gewebelage 22 bildet gemeinsam mit den Bindungskettfäden 28 die unterste Gewebelage LU. Bei dem in den Figuren 11 und 12 veranschaulichen Beispielen des Bindungssystems 26 könnten die Bindungskettfäden 28 entfallen.

Bei den weiteren beispielhaften Bindungsvarianten gemäß der Figuren 11 bis 13 ist sowohl die oberste Gewebelage LO, wie auch die unterste Gewebelage LU jeweils benachbart zur ersten Gewebelage 21 bzw. zur zweiten Gewebelage 22 angeordnet und durch Bindungsschussfäden 27 und Bindungskettfäden 28 gebildet. Die Position der Bindungsschussfäden 27 kann in Kettrichtung K in etwa auf Höhe der Schussfäden 24 der Gewebelagen 21, 22, 23 (Figuren 11 und 12) oder in Kettrichtung K versetzt hierzu sein (Figur 13). Die Anzahl der Bindungsschussfäden 27 kann von der Anzahl der Schussfäden 24 der Gewebelagen 21, 22, 23 pro Längenabschnitt des Gewebes in Kettrichtung K abweichen. Zum Beispiel wird bei der Ausführung in Figur 12 eine doppelt so große Anzahl an Bindungsschussfäden 27 pro Längenabschnitt verwendet, wie in den Gewebelagen 21, 22, 23.

Die Art der webtechnischen Bindungen innerhalb einer Gewebelage 21, 22, 23 sowie die Art der webtechnischen Bindung durch das Bindungssystem 26 ist im Prinzip beliebig wählbar. Es können Atlasbindungen, Leinwandbindungen, Köperbindungen, Dreherbindungen, usw. eingesetzt werden. Die Bindungsarten in den Gewebelagen 21, 22, 23 können identisch sein oder - abweichend zu den dargestellten bevorzugten Ausführungsbeispielen - auch voneinander verschieden sein.

In den Gewebelagen 21, 22, 23 sowie im Bindungssystem 26 können auch unterschiedliche Garne und/oder Garnstärken und/oder unterschiedlich viele Garne und/oder unterschiedliche Garnquerschnitte verwendet werden. in der mittleren Lage bzw. mittleren Gewebelage 23 können beispielsweise bandförmige Schussfäden und/oder bandförmige Kettfäden verwendet werden.

Wie sich aus den vorstehenden Erläuterungen ergibt, sind beispielsgemäß wenigstens drei Gewebelagen 21, 22, 23 vorhanden und optional zusätzlich eine oder zwei Gewebelagen, die durch das Bindungssystem 26 gebildet sind und die oberste Gewebelage LO benachbart zur ersten Gewebelage 21 und/oder die unterste Gewebelage LU benachbart zur zweiten Gewebelage 22 bilden können.

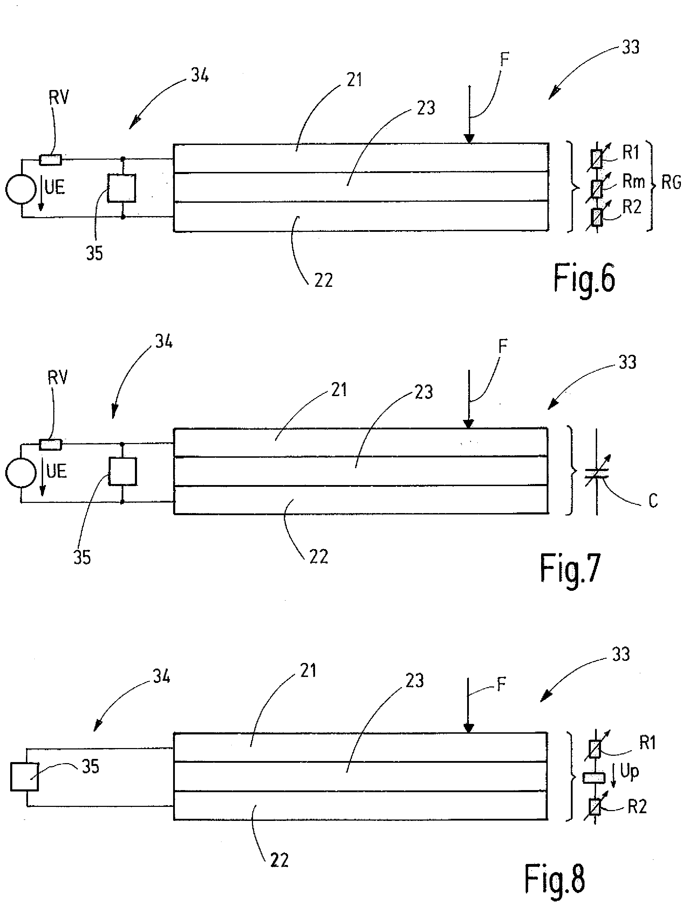

Die Gewebelagen 21, 22, 23 bilden gemeinsam eine Sensoranordnung 33 (Figuren 6 - 8). Die Sensoranordnung 33 hat wenigstens eine sich ändernde elektrische Eigenschaft. Beispielsweise kann die Sensoranordnung 33 einen sich abhängig von einer auf die Sensoranordnung 33 einwirkenden Kraft F ändernden Gesamtwiderstand RG, eine sich ändernde Kapazität C oder eine sich ändernde Piezospannung Up aufweisen. Die elektrischen Eigenschaften der Sensoranordnung 33 hängen von der Garneigenschaften ab, insbesondere in der mittleren Gewebelage 23.

Bei einem Ausführungsbeispiel (Figur 6) weist die mittlere Gewebelage 23 elektrisch leitfähige Schussfäden 24 und/oder Kettfäden 25 auf, die piezoresistives Material aufweisen, so dass sich der piezoresistive Widerstand Rm der mittleren Gewebelage 23 abhängig von der einwirkenden Kraft F ändert. Der piezoresistive Widerstand Rm ist der Durchgangswiderstand der mittleren Gewebelage 23 bei einem Stromfluss von der ersten Gewebelage 21 durch die mittlere Gewebelage 23 in die zweite Gewebelage 22 oder umgekehrt. Außerdem wird durch eine einwirkende Kraft F ein erster Übergangswiderstand R1 zwischen der ersten Gewebelage 21 und der benachbarten mittleren Gewebelage 23 sowie ein zweiter Übergangswiderstand R2 zwischen der zweiten Gewebelage 22 und der mittleren Gewebelage 23 gebildet, der sich abhängig von der einwirkenden Kraft F ändert. Die drei Gewebelagen erzeugen daher eine Reihenschaltung aus einem ersten Übergangswiderstand R1, einem piezoresistiven Widerstand Rm sowie einem zweiten Übergangswiderstand R2, die sich jeweils abhängig von der einwirkenden Kraft F ändern. Diese Reihenschaltung hat einen Gesamtwiderstand RG, der sich aus der Summe des ersten Übergangswiderstandes R1, des piezoresistiven Widerstandes Rm und des zweiten Übergangswiderstandes R2 ergibt.

Die erste Gewebelage 21 und die zweite Gewebelage 24 sind an eine Auswerteschaltung 34 angeschlossen. Dabei kann durch die Auswerteschaltung eine externe Spannung UE über einen optionalen Vorwiderstand RV die Auswerteschaltung 34 zwischen die erste Gewebelage 21 und die zweite Gewebelage 22 angelegt werden. Der Vorwiderstand RV kann dabei in Reihe zu dem Gesamtwiderstand RG geschaltet sein. Dabei ist es möglich, über eine Auswerteeinheit 35 der Auswerteschaltung 34 die an dem Gesamtwiderstand RG anliegende Spannung und/oder den durch die Auswerteschaltung 34 bzw. die Sensoranordnung 33 fließenden Strom auszuwerten, da sich die am Gesamtwiderstand RG anliegende Spannung bzw. der durch den Gesamtwiderstand RG fließende Strom abhängig von der einwirkenden Kraft F ändert. Vorzugsweise ist die externe Spannung UE eine Gleichspannung. Wie in Figur 6 schematisch veranschaulicht ist, wertet die Auswerteeinheit 35 beispielsgemäß die am Gesamtwiderstand RG anliegende Spannung aus. Zur Auswertung eines Stromes kann die Auswerteeinheit 35 parallel zu einem Messwiderstand geschaltet sein, der wiederum in Reihe zum Gesamtwiderstand RG der Sensoranordnung 33 geschaltet ist. Als Messwiderstand kann beispielsweise auch der Vorwiderstand RV verwendet werden.

Bei einem weiteren Ausführungsbeispiel ist die Sensoranordnung 33 als kapazitive Sensoranordnung ausgestaltet (Figur 7). Dabei bildet die mittlere Gewebelage 23 ein Dielektrikum und die erste Gewebelage 21 und die zweite Gewebelage 22 sind als Elektroden ausgeführt und entsprechen sozusagen den Platten eines Plattenkondensators. Die an die Sensoranordnung 33 angeschlossene Auswerteschaltung 34 entspricht der Ausführung nach Figur 6, so dass auf die vorstehende Erläuterung verwiesen werden kann. Abhängig von der einwirkenden Kraft F verformt sich die Sensoranordnung 33, so dass sich der Abstand zwischen der ersten Gewebelage 21 und der zweiten Gewebelage 22 an der Stelle ändert, an der die Kraft F auftritt. Dabei verändert sich die Kapazität C der Sensoranordnung 33, was durch die Auswerteschaltung 34 bzw. die Auswerteeinheit 35 erfasst werden kann. Dabei kann die Auswerteeinheit 35 die zwischen der ersten Gewebelage 21 und der zweiten Gewebelage 22 anliegende Spannung messen. Als externe Spannung UE wird vorzugsweise eine Gleichspannung angelegt.

Bei dem in Figur 8 veranschaulichten Ausführungsbeispiel der Sensoranordnung 33 weist die mittlere Gewebelage 23 Schussfäden 24 oder Kettfäden 25 auf, die piezoelektrisches Material enthalten und damit eine Piezospannung Up erzeugen können. Abhängig von der einwirkenden Kraft F verändert sich die Piezospannung Up und außerdem der erste Übergangswiderstand R1 und der zweite Übergangswiderstand R2. Die zwischen der ersten Gewebelage 21 und der zweiten Gewebelage 22 anliegende Spannung kann durch die Auswerteschaltung 34 erfasst und ausgewertet werden. Das Anlegen einer externen Spannung ist in diesem Fall nicht erforderlich und die Auswerteschaltung 34 kann ausschließlich aus der an die erste Gewebelage 21 und die zweite Gewebelage 22 angeschlossenen Auswerteeinheit 35 bestehen.

Somit kann die Sensoranordnung 33 bei Ausführungsbeispielen, bei denen ein Strom von der ersten Gewebelage 21, durch die mittlere Gewebelage 23 zu der zweiten Gewebelage 22 - oder in umgekehrte Richtung - fließen kann, eine Reihenschaltung aus mehreren und beispielsgemäß drei veränderlichen elektrischen Eigenschaften aufweisen, die sich abhängig von der einwirkenden Kraft F an der betreffenden Stelle lokal ändern.

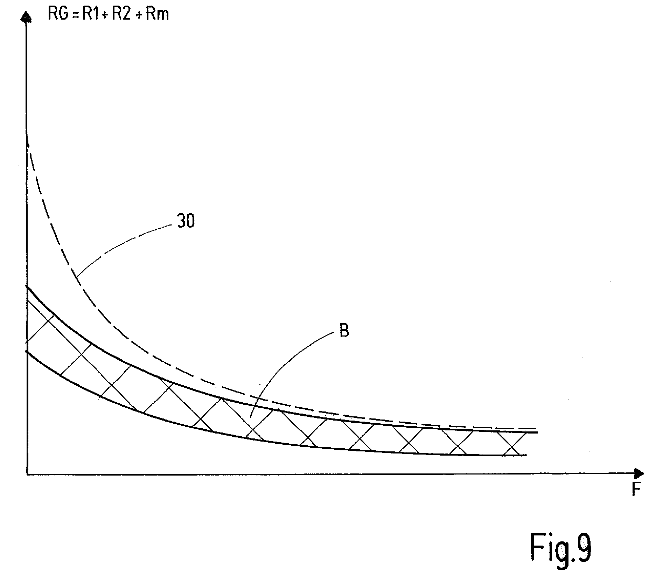

Das webtechnische Verbinden der Gewebelagen 21, 22, 23 mit oder ohne Bindungssystem 26 hat den Vorteil, dass die Streuung der Sensoranordnung 33 enger begrenzt werden kann. In Figur 9 ist beispielhaft der Gesamtwiderstand RG abhängig von der einwirkenden Kraft F anhand des Ausführungsbeispiels der Sensoranordnung 33 gemäß Figur 6 veranschaulicht. Die Gewebelagen 21, 22, 23 sind nicht miteinander vernäht, verklebt oder dergleichen. Es hat sich herausgestellt, dass durch das ausschließliche webtechnische Verbinden der Gewebelagen 21, 22, 23 der sich aufgrund von Herstellungstoleranzen ergebende Toleranzbereich B des von der Kraft F abhängigen Gesamtwiderstandes RG gegenüber anderen mehrlagigen sensorischen Geweben begrenzt werden kann. Der sich durch das webtechnische Verbinden der Gewebelagen ergebende Toleranzbereich B ist schematisch kreuzschraffiert in Figur 9 veranschaulicht. Demgegenüber vergrößert sich der Toleranzbereich B, wenn die Gewebelagen 21, 22, 23 nach ihrer Herstellung beispielsweise durch Nähen oder anderweitig mechanisch miteinander verbunden werden, was schematisch durch die gestrichelte obere Grenze BO in Figur 9 veranschaulicht ist, die gegenüber der oberen Grenze des Toleranzbereichs B des erfindungsgemäßen Gewebes 20 verschoben ist. Bei den hier beschriebenen Ausführungsbeispielen wird daher zwischen den Gewebelagen 21, 22, 23 ausschließlich eine webtechnische Bindung hergestellt, ohne, dass zusätzliche mechanische, physikalische oder chemische Verbindung zwischen den Gewebelagen 21, 22, 23 erzeugt werden.

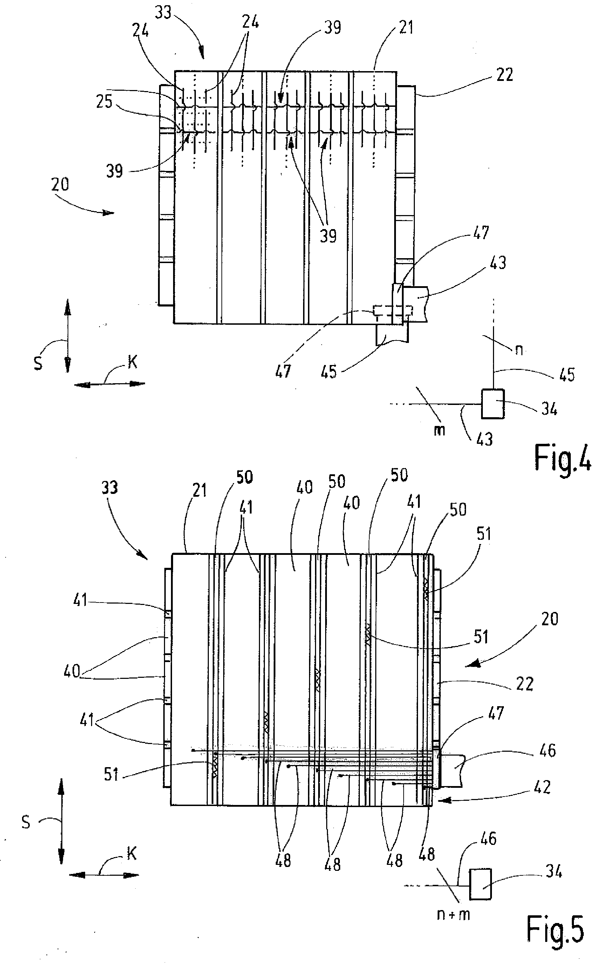

Aus den Figuren 2 bis 5 ist zu erkennen, dass die erste Gewebelage 21 beispielsgemäß in Schussrichtung S abwechselnd elektrisch leitfähige Streifen 40 und elektrisch nicht leitfähige Streifen 41 aufweist. Beispielsweise sind in einem elektrisch leitfähigen Streifen 40 zumindest einige oder alle Schussfäden 24 elektrisch leitfähig, während im elektrisch nicht leitfähigen Streifen 41 ausschließlich elektrisch nicht leitfähige Schussfäden 24 angeordnet sind. Die Kettfäden 25 der ersten Gewebelage 21 können dabei bei einem Ausführungsbeispiel elektrisch nicht leitfähig sein, insbesondere dann, wenn die vorhandenen elektrisch leitfähigen Schussfäden 24 in einem leitfähigen Streifen 40 einen elektrischen Kontakt zueinander aufweisen. Alternativ ist es auch möglich, dass zumindest einige oder alle der Kettfäden 25 der ersten Gewebelage 21 elektrisch leitfähig sind und jeweils eine Querkontaktierung 39 in einem bzw. allen elektrisch leitfähigen Streifen 40 bilden. Wenn elektrisch leitfähige Kettfäden 25 als Querkontaktierung 39 verwendet werden, muss verhindert werden, dass die elektrisch leitfähigen Streifen 40 durch diese Kettfäden 25 elektrisch kurzgeschlossen werden. Hierzu können die elektrisch leitfähigen Kettfäden im Bereich des elektrisch nicht leitfähigen Streifens 41 aufgetrennt werden, so dass eine elektrische Verbindung unterbrochen ist. Dazu kann es beispielsweise vorteilhaft sein, dass ein elektrisch leitfähiger Kettfaden 25 innerhalb eines nicht leitfähigen Streifens 41 eine Flottung bildet, die bevorzugt an zwei voneinander beabstandeten Stellen durchtrennt wird. Der herausgetrennte Teil des Kettfadens 25 kann entnommen werden. Die Trennung eines elektrisch leitfähigen Kettfadens 25, der in den elektrisch leitfähigen Streifen 40 jeweils eine Querkontaktierung 39 bildet, ist in Figur 4 stark schematisiert gezeigt.

Die zweite Gewebelage 22 bildet in Kettrichtung K verlaufende elektrisch leitfähige Streifen 40 und elektrisch nicht leitfähige Streifen 41, die in Schussrichtung S abwechselnd nebeneinander angeordnet sind. In einem elektrisch leitfähigen Streifen 40 können einige oder alle der Kettfäden 25 elektrisch leitfähig sein und in einem nicht leitfähigen Streifen 41 werden ausschließlich elektrisch nicht leitfähige Kettfäden 25 eingesetzt. Ist einer oder sind mehrere der Schussfäden 24 in der zweiten Gewebelage 22 zur Bildung einer Querkontaktierung 39 elektrisch leitfähig (analog zu der Beschreibung der ersten Gewebelage 21), kann eine elektrische Verbindung zwischen den elektrisch leitfähigen Streifen 40 durch den betreffenden elektrisch leitfähigen Schussfaden 24 dadurch verhindert werden, dass dieser im Bereich der elektrisch nicht leitfähigen Streifen 41 durchtrennt wird. Vorzugsweise wird der betreffende elektrisch leitfähige Schussfaden 24 innerhalb jedes nicht leitfähigen Streifens 41 an zwei voneinander beabstandeten Stellen durchtrennt und der herausgetrennte Teil des Schussfadens 24 entnommen. Hierzu kann der betreffende Schussfaden 24 zumindest in einem Bereich des jeweiligen nicht elektrisch leitfähigen Streifens 41 eine Flottung aufweisen, die herausgetrennt wird.

Die Querkontaktierung 39 in einem elektrisch leitfähigen Streifen 40 kann in einer oder beiden Gewebelagen 21, 22 alternativ oder zusätzlich auch durch Nähen und/oder Sticken mit einem elektrisch leitfähigen Garn und/oder Aufbringen einer elektrisch leitfähigen Schicht, beispielsweise durch Kleben und/oder Drucken und/oder Aufsprühen, usw. hergestellt werden.

Die Verlaufsrichtung der Streifen 40, 41 in der ersten Gewebelage 21 ist rechtwinklig zur Verlaufsrichtung der Streifen 40, 41 in der zweiten Gewebelage 22 ausgerichtet. In Abwandlung zu dem dargestellten Ausführungsbeispiel könnten die Steifen 40, 41 in der ersten Gewebelage 21 auch in Kettrichtung und die Streifen 40, 41 in der zweiten Gewebelage 22 auch in Schussrichtung S verlaufen.

Durch die beschriebene Anordnung der elektrisch leitfähigen Streifen 40 und der elektrisch nicht leitfähigen Streifen 41 in der ersten Gewebelage 21 und der zweiten Gewebelage 22 entsteht sozusagen eine Gitter- oder Matrixstruktur. Beim Einwirken einer Kraft F auf das Gewebe 20 bzw. die Sensoranordnung 33 kann dadurch festgestellt werden, an welcher Stelle die Kraft F auf die Gewebefläche des Gewebes 20 einwirkt. Die Ortsauflösung hängt dabei von der Anzahl und der Breite der Streifen 40, 41 ab. Es ist vorteilhaft, wenn die elektrisch nicht leitfähigen Streifen 41 quer zu ihrer Erstreckungsrichtung eine möglichst geringe Breite aufweisen, so dass die elektrische Isolierung zwischen den jeweils benachbarten elektrisch leitfähigen Streifen 40 gewährleistet ist, aber ein möglichst großer Flächenanteil als aktive Sensorfläche verwendet werden kann.

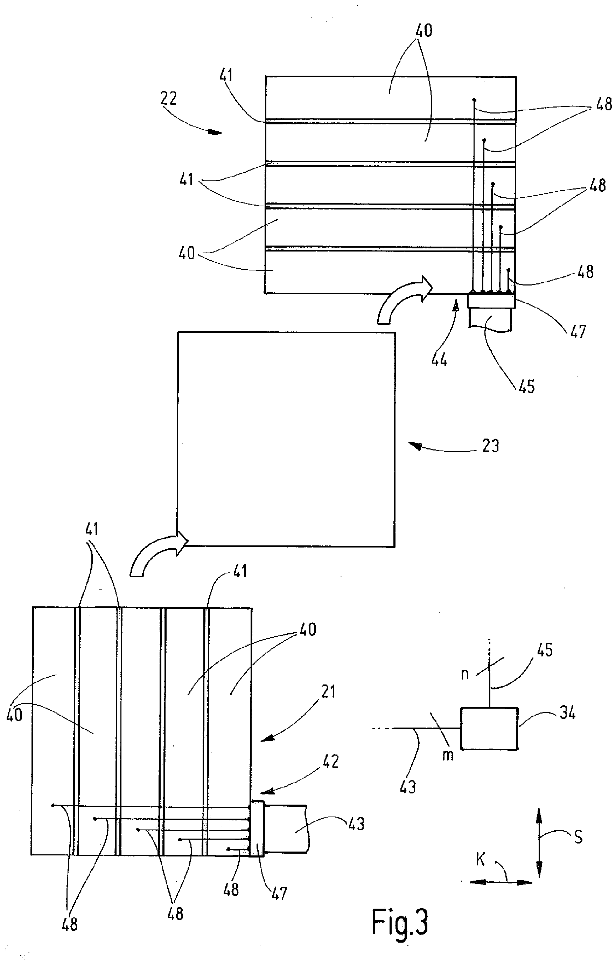

Die elektrisch leitfähigen Streifen 40 der ersten Gewebelage 21 sind beim Ausführungsbeispiel gemäß Figur 3 und 4 an einer einzigen Seite beispielsgemäß an einer ersten Seite 42 elektrisch mit einer ersten Leitung 43 verbunden. Die erste Leitung 43 weist abhängig von der Anzahl der leitfähigen Streifen 40 entsprechend viele Leiter bzw. Adern auf. Beim Ausführungsbeispiel hat die erste Leitung 43 m Adern bzw. Leiter (m = 2, 3, 4,...).

Entsprechend sind die leitfähigen Streifen 40 der zweiten Gewebelage 22 an einer einzigen Seite und beispielsgemäß einer zweiten Seite 44 mit einer zweiten Leitung 45 elektrisch verbunden. Die zweite Leitung 45 hat entsprechend der Anzahl der elektrisch leitfähigen Streifen 40 mehrere Leiter oder Adern und beim Ausführungsbeispiel beispielsgemäß n Leiter bzw. Adern (n = 2, 3, 4,...). Die Anzahl m und die Anzahl n können gleich groß oder voneinander verschieden sein.

Die Leitungen 43, 45 können jeweils über einen Stecker 47 oder ein anderes Verbindungsmittel direkt in einem Anschlussbereich, beispielsweise an der Gewebekante der betreffenden Gewebelage 21, 22, elektrisch mit den elektrisch leitfähigen Streifen 40 verbunden werden. An diesem Anschlussbereich kann daher ein Anschlussmittel zum Anbringen eines Steckers 47 vorhanden sein. Dazu können quer zu den elektrisch leitfähigen Streifen 40 in der Gewebestruktur der betreffenden Gewebelage 21, 22 verlaufende elektrisch leitfähige Verbindungsleiter 48 vorhanden sein oder alternativ auf die Gewebelage 21, 22 aufgebracht werden. Bei den Verbindungsleitern 48 kann es sich beispielsweise um elektrisch leitfähige Schussfäden 24 (z.B. in der ersten Gewebelage 21) oder um elektrisch leitfähige Kettfäden 25 (z.B. in der zweiten Gewebelage 22) handeln. Jeder Verbindungsleiter 48 ist nur mit jeweils einem der elektrisch leitfähigen Streifen 40 und einem Kontakt im Anschlussbereich elektrisch verbunden und gegenüber den anderen elektrisch leitfähigen Streifen 40 elektrisch isoliert. Der erforderliche Bauraum für den Anschlussbereich zum Anschließen des Steckers 47 bzw. der Leitungen 43, 45 an der Gewebekante kann dabei sehr klein sein und die Aufwand zur Herstellung der elektrischen Verbindung ist gering. Bei Verlegen eines sensorischen Gewebes 20 vor Ort muss lediglich noch die externe erste bzw. zweite Leitung 43, 45 verlegt und angeschlossen werden. Alle anderen elektrischen Kontaktierungen können bereits vorher bei der Herstellung erzeugt werden.

Wie in Figur 4 veranschaulicht ist, sind die erste Seite 42 und die zweite Seite 44 benachbart zueinander angeordnet, wobei sich eine der beiden Seiten und beispielsgemäß die erste Seite 42 in Kettrichtung K und die jeweils andere der beiden Seiten und beispielsgemäß die zweite Seite 44 in Schussrichtung S erstreckt. Dadurch ist eine einfache elektrische Kontaktierung auch bei größeren Flächen an zwei benachbarten Seiten 42, 44 möglich.

Die Auswerteschaltung 34 wird an die Leitungen 43, 45 angeschlossen. In der Auswerteschaltung 34 kann nicht nur erkannt werden, dass eine Kraft F auf das Gewebe 20 bzw. die Sensoranordnung 33 einwirkt, sondern es kann auch erkannt werden, an welcher Kreuzungsstelle zwischen einem elektrisch leitfähigen Streifen 40 der ersten Gewebelage 21 und einem elektrisch leitfähigen Streifen 40 der zweiten Gewebelage 22 die Kraft F einwirkt, da sämtliche elektrisch leitfähige Streifen 40 über separate Leiter an die Auswerteschaltung 34 angeschlossen sind.

Eine weitere Ausführungsform zur Vereinfachung der elektrischen Kontaktierung zwischen der Sensoranordnung 33 und der Auswerteschaltung 34 ist in Figur 5 veranschaulicht. Dort sind sowohl die elektrisch leitfähigen Steifen 40 der ersten Gewebelagen 21, als auch die elektrisch leitfähigen Streifen 40, der zweiten Gewebelage 22 an einer gemeinsamen Seite und beispielsgemäß der ersten Seite 42 des Gewebes 20 elektrisch an eine gemeinsame Leitung 46 angeschlossen. Die gemeinsame Leitung 46 weist eine Anzahl von Adern oder Leitern auf, die zumindest der Summe aus der Anzahl von elektrisch leitfähigen Streifen 40 der ersten Gewebelagen 21 und der Anzahl von elektrisch leitfähigen Streifen 40 der zweiten Gewebelage 22 entspricht. Die elektrische Kontaktierung des Gewebes 22 erfolgt somit ausschließlich an einer einzigen Gewebekante und ist dadurch weiter vereinfacht, insbesondere bei großflächigen Geweben 20, die beispielsweise als Bodenbelag verwendet werden.

Um die Kontaktierung an einer einzigen Seite über eine gemeinsame Leitung 46 zu ermöglichen, ist entweder in der ersten Gewebelage 21 oder der zweiten Gewebelage 22 in jedem elektrisch nicht leitfähigen Streifen 41 jeweils ein elektrisch leitfähiger Zwischenstreifen 50 eingewebt. Der elektrisch leitfähige Zwischenstreifen 50 ist gegenüber den beiden benachbarten elektrisch leitfähigen Streifen 40 der Gewebelage 21 bzw. 22 elektrisch isoliert, beispielsweise mit Abstand angeordnet. Jeder elektrisch leitfähige Zwischenstreifen 50 ist mittels einer Durchkontaktierung 51 mit genau einem elektrisch leitfähigen Streifen 40 der jeweils anderen Gewebelagen 22 bzw. 21 verbunden. Die Durchkontaktierung 51 kann dadurch erreicht werden, dass mindestens ein elektrisch leitfähiger Faden den Zwischenstreifen 50 mit dem jeweils zugeordneten elektrisch leitfähigen Streifen 40 der jeweils anderen Gewebelage 22 bzw. 21 verbindet. Bei dem in Figur 5 veranschaulichten Ausführungsbeispiel sind die elektrisch leitfähigen Zwischenstreifen 50 in der ersten Gewebelage 21 vorhanden und stellen mittels der Durchkontaktierungen 51 Verbindungen zu den elektrisch leitfähigen Streifen 40 der zweiten Gewebelage 22 her. Somit kann die elektrische Kontaktierung jedes elektrisch leitfähigen Streifens 40 der zweiten Gewebelage 22 über die Durchkontaktierung 51 und den elektrisch leitfähigen Zwischenstreifen 50 an der ersten Gewebelage 21 und mithin an einer gemeinsamen Seite des Gewebes 20 erfolgen. Im Übrigen erfolgt der Anschluss an die gemeinsame Leitung 46 über Verbindungsleiter 48 von den elektrisch leitfähigen Streifen 40 und Zwischenstreifen 50, wie es im Zusammenhang mit den Figuren 3 und 4 beschrieben wurde.

Der wenigstens eine Faden der Durchkontaktierung 51 kann ein elektrisch leitfähiger Kettfaden und/oder elektrisch leitfähiger Schussfaden mindestens eines der zu verbindenden Streifen 40, 50 und z.B. des elektrisch leitfähigen Zwischenstreifens 50 sein, die mit dem jeweils zugeordneten elektrisch leitfähigen Streifen 40 webtechnisch bei der Herstellung des Gewebes 20 verbunden wird oder umgekehrt.

Die Durchkontaktierungen 51 können alternativ zum dargestellten Ausführungsbeispiel auch durch andere elektrische Verbindungen im Anschluss an das Herstellen des Gewebes 20 erzeugt werden, beispielsweise durch Nähen eines leitfähigen Riegels, durch Einbringen einer Niet aus einem elektrisch leitfähigen Material, usw. Es ist jedoch bevorzugt, wenn die Durchkontaktierung 51 bereits beim Weben des Gewebes 20 auf einer Webmaschine hergestellt wird.

Eine Durchkontaktierung 51 durchsetzt die mittlere Lage 23. Abhängig von der Ausführung der Sensoranordnung 33 kann dabei eine elektrische Verbindung mit der mittleren Lage 23 hergestellt werden, wenn diese im Bereich der Durchkontaktierung 51 elektrisch leitfähige Bestandteile aufweist, beispielsweise bei der Ausführung nach Figur 6. Im unbelasteten Zustand der Sensoranordnung 33 ist der elektrische Widerstand Rm der mittleren Lage 23 ausreichend groß, so dass die elektrische Verbindung der Durchkontaktierung 51 mit der mittleren Lage 23 die Funktion nicht beeinträchtigt. Es ist auch möglich, die elektrische Verbindung zwischen der Durchkontaktierung 51 und der mittleren Lage 23 durch Isolationsmaßnahmen zu verhindern.

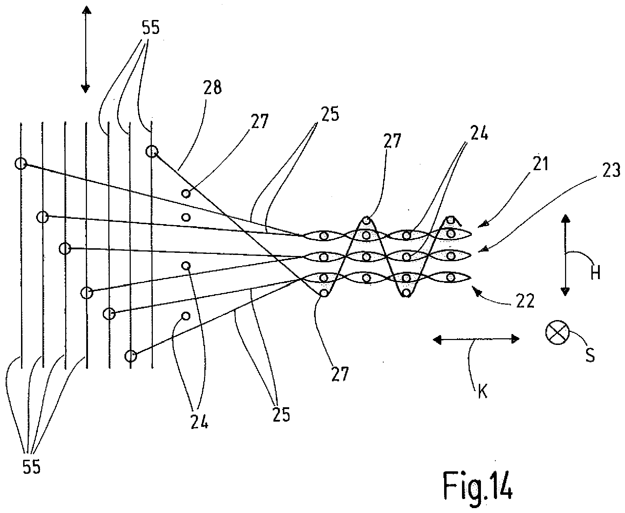

In Figur 14 ist stark schematisiert blockschaltbildähnlich ein Webvorgang veranschaulicht, wie er auf einer Webmaschine zur Herstellung des Gewebes 20 ausgeführt werden kann. Die Webmaschine weist mindestens und beispielsweise genau sieben Webschäfte 55 auf. Die Webschäfte 55 können sich in Höhenrichtung H unabhängig voneinander nach oben und nach unten bewegen und führen jeweils die Kettfäden 25 einer der Gewebelagen 21, 22, 23 oder die Bindungskettfäden 28. Durch eine entsprechende Fachbildung können die Schussfäden 24 bzw. der Bindungsschussfaden 27 eingetragen und angeschlagen werden. Die Art der Fachbildung und die Anzahl der eingetragenen Schussfäden 24 bzw. Bindungsschussfäden 27 hängen von der gewünschten Bindungsart ab und können variieren. Figur 14 zeigt diesbezüglich lediglich beispielhaft eine von vielen Möglichkeiten.

Möglichkeiten zur Herstellung des Gewebes 20 mit einer Webmaschine sind beispielsweise aus der Veröffentlichung von Pelin Gurkan Unal mit dem Titel "3D-Woven Fabrics" bekannt (veröffentlicht in "Woven Fabrics", Edited by Han-Yong Jeon, ISBN 978-953-51-0607-4, abrufbar unter http://www.intechopen.com/books/woven-fabrics.

Die Erfindung betrifft ein mehrlagiges sensorisches Gewebe 20 mit mehreren und beispielsgemäß drei Gewebelagen 21, 22, 23. Jede Gewebelage 21, 22, 23 weist Schussfäden 24 und Kettfäden 25 auf. Optional kann ein Bindungssystem 26 mit Bindungsschussfäden 27 und Bindungskettfäden 28 vorgesehen sein. Die erste Gewebelage 21 und die zweite Gewebelage 22 weisen jeweils sich in einer Kettrichtung K oder in einer Schussrichtung S erstreckende elektrisch leitfähige Streifen 40 und elektrisch nicht leitfähige Streifen 41 auf, die abwechselnd nebeneinander angeordnet sind, wobei sich die Streifen 40, 41 der beiden Gewebelagen 21, 22 kreuzen.

### Bezugszeichenliste:

- 20: Gewebe
- 21: erste Gewebelage
- 22: zweite Gewebelage
- 23: mittlere Gewebelage
- 24: Schussfaden
- 25: Kettfaden
- 26: Bindungssystem
- 27: Bindungsschussfaden
- 28: Bindungskettfaden

- 33: Sensoranordnung
- 34: Auswerteschaltung
- 35: Auswerteeinheit

- 39: Querkontaktierung
- 40: elektrisch leitfähiger Streifen
- 41: elektrisch nicht leitfähiger Streifen
- 42: erste Seite
- 43: erste Leitung
- 44: zweite Seite
- 45: zweite Leitung
- 46: gemeinsame Leitung
- 47: Stecker
- 48: Verbindungsleiter

- 50: elektrisch leitfähiger Zwischenstreifen
- 51: Durchkontaktierung

- 55: Webschaft
- B: Toleranzbereich
- BO: Obere Grenze des Toleranzbereichs beim Stand der Technik
- C: Kapazität
- H: Höhenrichtung
- K: Kettrichtung
- LO: oberste Gewebelage
- LU: unterste Gewebelage
- R1: erster Übergangswiderstand
- R2: zweiter Übergangswiderstand
- RG: Gesamtwiderstand
- Rm: piezoresistiver Widerstand
- RV: Vorwiderstand
- S: Schussrichtung
- Up: Piezospananung

## Patentansprüche

1. Gewebe ( 20 ) mit wenigstens drei übereinander angeordneten Lagen,
wobei eine der Lagen eine erste Gewebelage ( 21 ) bildet, die elektrisch leitfähigen Kettfäden ( 25 ) und/oder Schussfäden ( 24 ) aufweist,
wobei eine weitere der Lagen eine zweite Gewebelage ( 22 ) bildet, die elektrisch leitfähige Kettfäden ( 25 ) und/oder Schussfäden ( 24 ) aufweist,
wobei noch eine weitere der Lagen eine mittlere Lage ( 23 ) bildet, die zwischen der ersten ( 21 ) und der zweiten Gewebelage ( 22 ) angeordnet ist,
wobei die erste Gewebelage ( 21 ), die zweite Gewebelage ( 22 ) und die mittlere Lage ( 23 ) eine Sensoranordnung ( 33 ) bilden, die eine sich während einer Krafteinwirkung auf die Lagen ( 21 , 22 , 23 ) ändernde elektrische Eigenschaft aufweisen,
wobei die erste Gewebelage ( 21 ) sich in einer Kettrichtung (K) oder in einer Schussrichtung (S) erstreckende elektrisch leitfähige Streifen ( 40 ) und elektrisch nicht leitfähige Streifen ( 41 ) aufweist, die abwechselnd nebeneinander angeordnet sind,
wobei die zweite Gewebelage ( 22 ) sich in Kettrichtung (K) oder in Schussrichtung (S) erstreckende elektrisch leitfähige Streifen ( 40 ) und elektrisch nicht leitfähige Streifen ( 41 ) aufweist, die abwechselnd nebeneinander angeordnet sind und sich quer zu den Streifen ( 40 , 41 ) der ersten Gewebelage ( 21 ) erstrecken,
**dadurch gekennzeichnet, dass**
die erste Gewebelage ( 21 ) und die zweite Gewebelage ( 22 ) an einer gemeinsamen Seite ( 42 ) des Gewebes ( 20 ) über eingewebte elektrische Verbindungsleiter ( 48 ) elektrisch mit einer Auswerteschaltung ( 34 ) verbunden sind, so dass eine elektrische Kontaktierung des Gewebes ausschließlich an einer einzigen Gewebekante erfolgt.

2. Gewebe nach Anspruch 1, **dadurch gekennzeichnet, dass** die mittlere Lage ( 23 ) eine Gewebelage ist.

3. Gewebe nach Anspruch 1 oder 2, **dadurch gekennzeichnet, dass** nur drei Gewebelagen ( 21 , 22 , 23 ) vorhanden sind.

4. Gewebe nach einem der vorhergehenden Ansprüche **dadurch gekennzeichnet, dass** in der ersten Gewebelage ( 21 ) oder der zweiten Gewebelage ( 22 ) in wenigstens einem elektrisch nicht leitfähigen Streifen ( 41 ) jeweils ein elektrisch leitfähiger Zwischenstreifen ( 50 ) eingewebt ist, der gegenüber den beiden benachbarten elektrisch leitfähigen Streifen ( 40 ) in dieser Gewebelage ( 21 , 22 ) elektrisch isoliert ist.

5. Gewebe nach Anspruch 4, **dadurch gekennzeichnet, dass** jeder elektrisch leitfähige Zwischenstreifen ( 50 ) in der ersten oder zweiten Gewebelage ( 21 , 22 ) mittels einer Durchkontaktierung ( 51 ) mit genau einem elektrisch leitfähigen Streifen ( 40 ) der jeweils anderen Gewebelage ( 22 bzw. 21 ) verbunden ist.

6. Gewebe nach Anspruch 4 oder 5, **dadurch gekennzeichnet, dass** die Durchkontaktierung ( 51 ) durch eine webtechnische Abbindung mindestens eines leitfähigen Fadens aus den Zwischenstreifen ( 50 ) der Gewebelage ( 21 ) mit mindestens einem leitfähigen Faden aus den elektrisch leitfähigen Streifen ( 40 ) der jeweils anderen Gewebelage ( 22 bzw. 21 ) hergestellt ist.

7. Gewebe nach einem der vorhergehenden Ansprüche, **dadurch gekennzeichnet, dass** die in einem elektrisch leitfähigen Streifen ( 40 ) in Richtung des Streifens ( 40 ) verlaufenden elektrisch leitfähigen Fäden ( 24 , 25 ) durch wenigstens eine Querkontaktierung ( 39 ) elektrisch miteinander verbunden sind.

8. Gewebe nach einem der vorhergehenden Ansprüche, **dadurch gekennzeichnet, dass** ein Kettfaden ( 25 ) und/oder ein Schussfaden ( 24 ) der ersten Gewebelage ( 21 ) aus einem elektrisch nicht leitfähigen Streifen ( 41 ) eine webtechnische Bindung mit einem Schussfaden ( 24 ) oder Kettfaden ( 25 ) einer anderen Gewebelage ( 22 , 23 ) bildet.

9. Gewebe nach einem der vorhergehenden Ansprüche, **dadurch gekennzeichnet, dass** ein Kettfaden ( 25 ) und/oder ein Schussfaden ( 24 ) der zweiten Gewebelage ( 22 ) aus einem elektrisch nicht leitfähigen Streifen ( 41 ) eine webtechnische Bindung mit einem Schussfaden ( 24 ) oder Kettfaden ( 25 ) einer anderen Gewebelage ( 21 , 23 ) bildet.

10. Gewebe nach einem der vorhergehenden Ansprüche, **dadurch gekennzeichnet, dass** ein Bindungssystem ( 26 ) mit elektrisch nicht leitfähigen Bindungskettfäden ( 28 ) und elektrisch nicht leitfähigen Bindungsschussfäden ( 27 ) vorhanden ist, wobei das Bindungssystem ( 26 ) durch Bildung von webtechnischen Bindungen zur Verbindung der Gewebelagen ( 21 , 22 , 23 ) eingerichtet ist.

11. Gewebe nach Anspruch 10, **dadurch gekennzeichnet, dass** die erste Gewebelage ( 21 ), die zweite Gewebelage ( 22 ) und die mittlere Lage ( 23 ) nicht unmittelbar webtechnisch miteinander verbunden sind.

12. Gewebe nach einem der vorhergehenden Ansprüche, **dadurch gekennzeichnet, dass** die erste Gewebelage ( 21 ) und die zweite Gewebelage ( 22 ) auf einer gemeinsamen Webmaschine hergestellt werden.

13. Gewebe nach einem der vorhergehenden Ansprüche, **dadurch gekennzeichnet, dass** eine der wenigstens drei übereinander angeordneten Lagen eine unterste Gewebelage (LU) und eine andere der wenigstens drei übereinander angeordneten Lagen eine oberste Gewebelage (LO) bildet.

14. Gewebe nach Anspruch 13, **dadurch gekennzeichnet, dass** die oberste Gewebelage (LO) durch die erste Gewebelage ( 21 ) gebildet ist.

15. Gewebe nach Anspruch 13 oder 14, **dadurch gekennzeichnet, dass** die unterste Gewebelage (LU) durch die zweite Gewebelage ( 22 ) gebildet ist.

## Claims

1. A woven fabric (20) having at least three layers that are arranged one above the other,
wherein one of the layers forms a first woven fabric layer (21) that comprises electrically conductive warp threads (25) and/or weft threads (24),
wherein a further one of the layers forms a second woven fabric layer (22) that comprises electrically conductive warp threads (25) and/or weft threads (24),
wherein another further one of the layers forms an intermediate layer (23) that is arranged between the first woven fabric layer (21) and the second woven fabric layer (22),
wherein the first woven fabric layer (21), the second woven fabric layer (22) and the intermediate layer (23) form a sensor arrangement (33) that comprises an electrical characteristic that changes while a force is acting upon the layers (21, 22, 23),
wherein the first woven fabric layer (21) comprises electrically conductive strips (40) and electrically non-conductive strips (41) that extend in a warp direction (K) or in a weft direction (S), said strips being arranged adjacent to one another in an alternating manner,
wherein the second woven fabric layer (22) comprises electrically conductive strips (40) and electrically non-conductive strips (41) that extend in the warp direction (K) or in the weft direction (S), said strips being arranged adjacent to one another in an alternating manner and extending in a transverse manner with respect to the strips of the first woven fabric layer,
**characterized in that**
the first woven fabric layer (21) and the second woven fabric layer (22) are electrically connected on a common side (42) of the woven fabric (20) to an evaluating circuit (34) via an electrically conductive connecting conductor 48, such that an electrical contacting of the woven fabric is achieved at a single woven fabric edge.

2. The woven fabric as claimed in claim 1, **characterized in that** the intermediate layer (23) is a woven fabric layer.

3. The woven fabric as claimed in claim 1, **characterized in that** that only three woven fabric layers are provided.

4. The woven fabric as claimed in claim 1, **characterized in that** an electrically conductive intermediate strip (50) is woven respectively in the first woven fabric layer (21) or the second woven fabric layer (22) in at least one electrically non-conductive strip (41), said intermediate strip (50) being electrically insulated with respect to the two adjacent electrically conductive strips (40) in this woven fabric layer (21, 22).

5. The woven fabric as claimed in claim 4, **characterized in that** each electrically conductive intermediate strip (50) in the first or second woven fabric layer (21, 22) is connected by means of a through-contacting arrangement (51) to precisely one electrically conductive strip (40) of the respective other woven fabric layer (22 or 21).

6. The woven fabric as claimed in claim 4 or 5, **characterized in that** the through-contacting arrangement (51) is produced by means of a woven connection of at least one conductive thread from the intermediate strip (50) of the woven fabric layer (21) to at least one conductive thread (40) from the electrically conductive strip of the respective other woven fabric layer (22 or 21).

7. The woven fabric according to any one of the preceding claims, **characterized in that** the electrically conductive threads (24, 25) that extend in an electrically conductive strip (40) in the direction of the strip (40) are electrically connected to one another by means of at least one transverse contacting arrangement (39).

8. The woven fabric according to any one of the preceding claims, **characterized in that** a warp thread (25) and/or a weft thread (24) of the first woven fabric layer (21) from an electrically non-conductive strip (41) forms a woven binding arrangement with a weft thread (24) or warp thread (25) of another woven fabric layer (22, 23).

9. The woven fabric according to any one of the preceding claims, **characterized in that** a warp thread (25) and/or a weft thread (24) of the second woven fabric layer (22) from an electrically non-conductive strip (41) forms a woven binding arrangement with a weft thread (24) or warp thread (25) of another woven fabric layer (21, 23).

10. The woven fabric according to any one of the preceding claims, **characterized in that** a binding system (26) having electrically non-conductive binding warp threads (28) and electrically non-conductive binding weft threads (27) is provided, wherein the binding system (26) is configured by means of forming woven binding arrangements so as to connect the woven fabric layers (21, 22, 23).

11. The woven fabric as claimed in claim 10, **characterized in that** the first woven fabric layer (21), the second woven fabric layer (22) and the intermediate layer (23) are not directly connected to one another using a weaving technique.

12. The woven fabric according to any one of the preceding claims, **characterized in that** the first woven fabric layer (21) and the second woven fabric layer (22) are produced on a common weaving machine.

13. The woven fabric according to any one of the preceding claims, **characterized in that** one of the at least three layers arranged one above the other forms a lowest woven fabric layer (LU) and another of the at least three layers arranged one above the other forms an uppermost woven fabric layer (LO).

14. The woven fabric as claimed in claim 13, **characterized in that** the uppermost woven fabric layer (LO) is formed by means of the first woven fabric layer (21).

15. The woven fabric layer as claimed in claim 13 or 14, **characterized in that** the lowest woven fabric layer (LU) is formed by means of the second woven fabric layer (22).

## Revendications

1. Tissu (20) comprenant au moins trois couches disposées l'une sur l'autre,
l'une des couches formant une première couche de tissu (21) qui comporte des fils de chaîne (25) et/ou des fils de trame (24) électriquement conducteurs,
une autre des couches formant une deuxième couche de tissu (22) qui comporte des fils de chaîne (25) et/ou des fils de trame (24) électriquement conducteurs, encore une autre des couches formant une couche médiane (23) qui est disposée entre la première couche de tissu (21) et la deuxième couche de tissu (22),
la première couche de tissu (21), la deuxième couche de tissu (22) et la couche médiane (23) formant un ensemble capteur (33) qui présente une propriété électrique qui varie lorsqu'une force agit sur les couches (21, 22, 23),
la première couche de tissu (21) comportant des bandes électriquement conductrices (40) et des bandes électriquement non conductrices (41) qui s'étendent dans une direction de chaîne (K) ou dans une direction de trame (S) et qui sont disposées alternativement l'une à côté de l'autre,
la deuxième couche de tissu (22) comportant des bandes électriquement conductrices (40) et des bandes électriquement non conductrices (41) qui s'étendent dans la direction de chaîne (K) ou dans la direction de trame (S) et qui sont disposées alternativement l'une à côté de l'autre et qui s'étendent transversalement aux bandes (40, 41) de la première couche de tissu (21), **caractérisé en ce que**
la première couche de tissu (21) et la deuxième couche de tissu (22) sont reliées électriquement à un circuit d'évaluation (34) sur un côté commun (42) du tissu (20) par le biais de conducteurs de liaison électrique tissés (48) de sorte qu'une mise en contact électrique du tissu est effectuée exclusivement au niveau d'un seul bord du tissu.

2. Tissu selon la revendication 1, **caractérisé en ce que** la couche médiane (23) est une couche de tissu.

3. Tissu selon la revendication 1 ou 2, **caractérisé en ce qu'**il n'y a que trois couches de tissu (21, 22, 23).

4. Tissu selon l'une des revendications précédentes, **caractérisé en ce qu'**une bande intermédiaire électriquement conductrice (50) est insérée par tissage dans au moins une bande électriquement non conductrice (41) dans la première couche de tissu (21) ou dans la deuxième couche de tissu (22), ladite bande intermédiaire étant électriquement isolée par rapport aux deux bandes électriquement conductrices adjacentes (40) de cette couche de tissu (21, 22).

5. Tissu selon la revendication 4, **caractérisé en ce que** chaque bande intermédiaire électriquement conductrice (50) de la première ou deuxième couche de tissu (21, 22) est reliée à exactement une bande électriquement conductrice (40) de l'autre couche de tissu (22 ou 21) par des trous de contact (51).

6. Tissu selon la revendication 4 ou 5, **caractérisé en ce que** les trous de contact (51) sont par liaison par tissage d'au moins un fil conducteur des bandes intermédiaires (50) de la couche de tissu (21) à au moins un fil conducteur des bandes électriquement conductrices (40) de l'autre couche de tissu (22 ou 21).

7. Tissu selon l'une des revendications précédentes, **caractérisé en ce que** les fils électriquement conducteurs (24, 25), qui s'étendent en direction de la bande (40) dans une bande électriquement conductrice (40), sont reliés électriquement entre eux par au moins un contact transversal (39).

8. Tissu selon l'une des revendications précédentes, **caractérisé en ce qu'**un fil de chaîne (25) et/ou un fil de trame (24) de la première couche de tissu (21) d'une bande électriquement non conductrice (41) forme un liage tissé avec un fil de trame (24) ou un fil de chaîne (25) d'une autre couche de tissu (22, 23).

9. Tissu selon l'une des revendications précédentes, **caractérisé en ce qu'**un fil de chaîne (25) et/ou un fil de trame (24) de la deuxième couche de tissu (22) d'une bande électriquement non conductrice (41) forme un liage tissé avec un fil de trame (24) ou un fil de chaîne (25) d'une autre couche de tissu (21, 23).

10. Tissu selon l'une des revendications précédentes, **caractérisé en ce qu'**on est en présence un système de liage (26) qui comprend des fils de chaîne de liage électriquement non conducteurs (28) et des fils de trame de liage électriquement non conducteurs (27), le système de liage (26) étant conçu pour relier les couches de tissu (21, 22, 23) par formation de liages tissés.

11. Tissu selon la revendication 10, **caractérisé en ce que** la première couche de tissu (21), la deuxième couche de tissu (22) et la couche médiane (23) ne sont pas directement reliées entre elles par tissage.

12. Tissu selon l'une des revendications précédentes, **caractérisé en ce que** la première couche de tissu (21) et la deuxième couche de tissu (22) sont réalisées sur un métier à tisser commun.

13. Tissu selon l'une des revendications précédentes, **caractérisé en ce que** l'une des au moins trois couches disposées l'une sur l'autre forme une couche de tissu inférieure (LU) et une autre des au moins trois couches disposées l'une sur l'autre forme une couche de tissu supérieure (LO).

14. Tissu selon la revendication 13, **caractérisé en ce que** la couche de tissu supérieure (LO) est formée par la première couche de tissu (21).

15. Tissu selon la revendication 13 ou 14, **caractérisé en ce que** la couche de tissu inférieure (LU) est formée par la deuxième couche de tissu (22).
